# EUROPEAN PATENT APPLICATION

(11) **EP 4 417 458 A1**
(43) Date of publication of application: **21.08.2024**
(21) Application number: 23206746.2
(22) Date of filing: 30.10.2023
(51) Int. Cl.: B60L 50/50

(54) **METHOD FOR SUPPLYING ENERGY TO AN OFF-ROAD VEHICLE, IN PARTICULAR TO A UTILITY VEHICLE, AND ASSOCIATED OFF-ROAD VEHICLE**

(71) Applicant: Volvo Construction Equipment AB, 631 85 Eskilstuna (SE)
(72) Inventor: Örkenrud, Kim, 352 64 Växjö (SE); Ekman, Gordon, 342 63 Moheda (SE); Kvist, Roland, 360 42 Braås (SE)
(74) Representative: Lavoix

(57) **Abstract**

The method comprises driving a first off-road vehicle close to a second off-road vehicle, connecting a first supply port of an energy storage system of the first vehicle to a second intake port of an energy storage system of the second vehicle, in order to establish a connection between the first storage system and the second storage system, then transferring energy from the first storage system to the second storage system through the connection.

## Description

### TECHNICAL FIELD

The invention relates invention relates generally to the field of off-road vehicles. In particular aspects, the invention relates to to a method for supplying energy to an off-road vehicle, in particular to a uytility vehicle. The invention also concerns an off-road vehicle configured to implement such method.

The invention can be applied in various types of off-road vehicle; such as heavyduty vehicles, trucks, construction equipment, etc. Although the invention will be described with respect to a particular utility vehicle, the invention is not restricted to any particular utility vehicle.

### BACKGROUND

An utility vehicle, for example an excavator, is generally operating off-road within a limited area of a work site. Regular energy supply, e.g. fuel, is required in order to keep the utility vehicle running. Traditionnally, the vehicle is driven to a supply station when required. However, such a utility vehicle has generally a limited mobility, and driving the utility vehicle to the supply station then back to the work site takes time, decrasing the overall useful running time of the utility vehicle and decreasing the site productivity considerably. For example, refuelling a crawled excavator located a few hundred meters from the supply station can take up to 60 minutes if the excavator must go by its own means. At the same time, the energy consumption for going back and forth to the supply station is not negligible.

### SUMMARY

The invention aims at solving the aforementioned problems, by proposing a method for supplying energy to an off-road vehicle, said method allowing time and productivity savings.

To this end, an aspect of the invention concerns a method for transferring energy from a first off-road vehicle to a second off-road vehicle, the second off-road vehicle being different from the first off-road vehicle, wherein:
- the first off-road vehicle comprises a first storage system, which is configured to store energy required to power at least one drivetrain of the first off-road vehicle, the first storage system comprising:
   - a first intake port, which is configured be connected to an energy supply device in order to to replenish the first storage system, and
   - a supply port, through which energy from the first storage system is distributed,
- the second off-road vehicle comprises a second storage system, which is configured to store energy required to power at least one drivetrain of the second off-road vehicle and which comprises a second intake port, which is configured be connected to an energy supply in order to to replenish the second storage system, the energy used by the second off-road vehicle being identical to the energy used by the first off-road vehicle,
the method comprises:
- driving the first off-road vehicle close to the second off-road vehicle,
- connecting the first supply port to the second intake port, in order to establish a connection between the first storage system and the second storage system, and
- transferring energy from the first storage system to the second storage system through the connection.

In certain examples:
- The first off-road vehicle and the second off-road vehicle are hydrogen-powered vehicles, the first energy storage system and second energy storage system being hydrogen storage systems.
- The first off-road vehicle and the second off-road vehicle are electric vehicles, the first energy storage system and second energy storage system being electrical storage systems.

Another aspect of the invention concerns a first off-road vehicle, which is configured to implement the method previously described, wherein:
- the first off-road vehicle comprises a first storage system, which is configured to store energy required to power at least one drivetrain of the off-road vehicle,
- the first storage system comprises:
   - a first intake port, which is configured be connected to an energy supply in order to replenish the first storage system with energy, and
   - a supply port, through which energy from the first storage system can be distributed to a second off-road vehicle, which is different from the first off-road vehicle.

In certain examples:
- The off-road vehicle is powered by electricity, and the first storage system is an electrical storage system, for example a battery pack.

The off-road vehicle is powered by hydrogen, and the first storage system is an hydrogen storage system.

The first storage system comprises at least one hydrogen tank, whereas the off-road vehicle comprises:
- a distribution line, which links the at least one hydrogen tank to the supply port,
- a on-off valve, which is arranged on the distribution line and which is configured to switch between an open configuration, where hydrogen is allowed to flow from the hydrogen tank to the supply port, and a closed configuration, where hydrogen is prevented from flowing from the hydrogen tank to the supply port,
- a flow regulator, which is arranged on the distribution line and which is configured to regulate a flow of hydrogen flowing though the distribution line when the on-off valve is in the open configuration, and
- a heat exchanger, which is arranged on the distribution line and which is configured to regulate a temperature of the hydrogen flowing through the distribution line.

Additional features and advantages are disclosed in the following description, claims, and drawings, and in part will be readily apparent therefrom to those skilled in the art or recognized by practicing the invention as described herein. There are also disclosed herein control units, computer readable media, and computer program products associated with the above discussed technical effects and corresponding advantages.

### BRIEF DESCRIPTION OF THE DRAWINGS

With reference to the appended drawings, below follows a more detailed description of aspects of the invention cited as examples.
**FIG. 1** shows respectively, on two inserts a) and b), an exemplary off-road vehicle according to embbodiments of the invention and an exemplary structure of a hydrogen tank system of said off-road vehicle;
**FIG. 2** shows respectively, on two inserts a) and b), an exemplary method for supplying energy from the first vehicle to a second vehicle, and a synoptic diagram of said method.

### DETAILED DESCRIPTION

Aspects set forth below represent the necessary information to enable those skilled in the art to practice the invention.

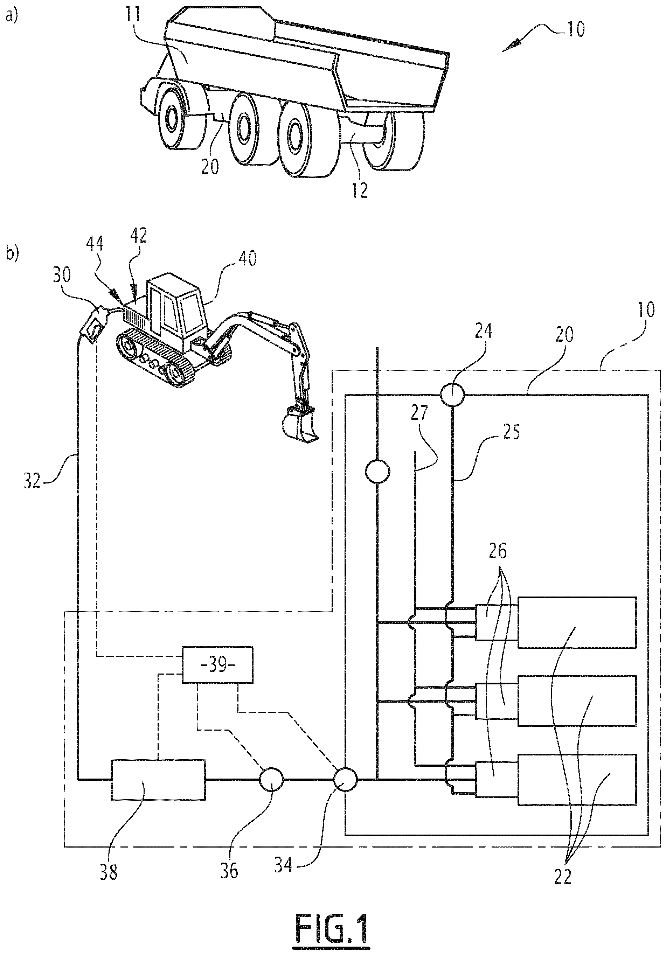

A first vehicle, here an off-road vehicle 10, is represented on figure 1. In the illustrated example, the off-road vehicle 10 is a dump truck., which comprises a bucket 11. The off-road vehicle 10, also simply said "vehicle 10" in the present description, comprises a storage system 20, which is configured to store energy required to power the off-road vehicle 10. By "required to power the off-road vehicle 10", it is understood that the energy stored by the storage system 20 is used as a main source of energy of the off-road vehicle 10, for example to power at least one drivetrain 12 of the off-road vehicle 10.

In the illustrated example, the off-road vehicle 10 is powered by hydrogen, and the storage system 20 is an hydrogen storage system. For example, the off-road vehicle 10 comprises a fuel-cell, which is configured to generate electricity by using hydrogen, i.e. electrochemical energy, in order to power at least one drivetrain 12 of the vehicle 10. The fuel-cell is not represented. Alternatively, the off-road vehicle 10 is an electric vehicle, and the storage system 20 is an electricity storage system, for example a battery pack. Aternatively, the off-road vehicle 10 is a hybrid vehicle, which is powered by using several types of energy source, for example fuel and electricity, etc.

With reference to the illustrated exemple of figure 1b), the storage system 20 comprises at least one hydrogen tank 22, here three hydrogen tanks 22. Each tank 22 is fitted with a respective on-tank valve 26 - or OTV 26 in short -, which controls the flow of hydrogen flowing into / out of the respective hydrogen tank 22. Advantageously, each OTV 26 is also connected to a vent line 27, which is configured to evacuate hydrogen leaking from each OTV outside the first vehicle 10.

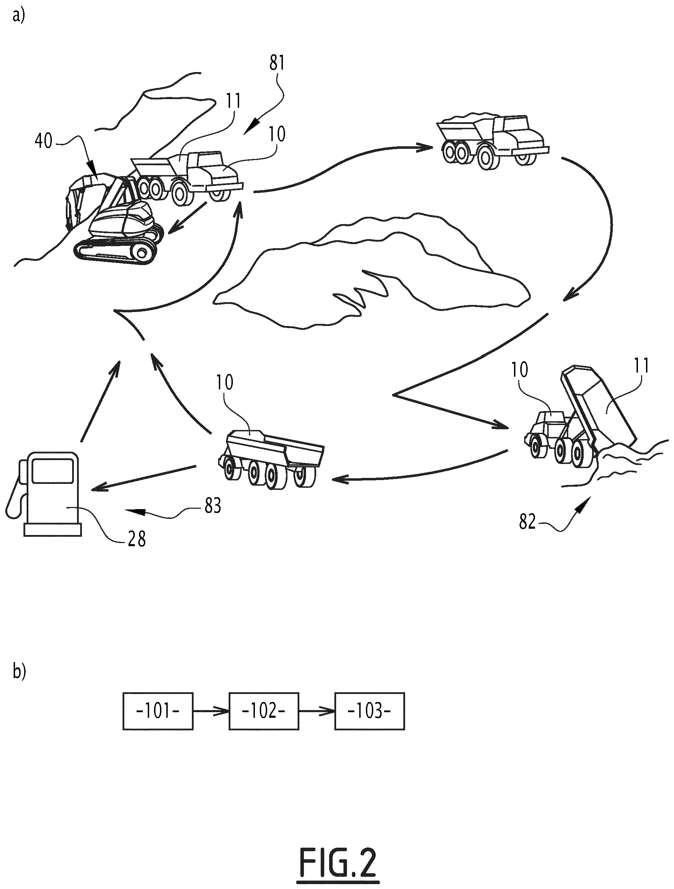

The storage system 20 also comprises a first intake port 24, which is configured be connected to an energy supply 28 in order to replenish the first storage system 20 with energy. In the illustrated example of figure 2a), the energy supply 28 is figuratively represented by a fuel pump, although the "fuel" considered here is hydrogen. The energy supply 28 is not part of the invention but contributes to explain its context. The first intake port 24 is linked to each OTV 26 by a supply pipe 25.

The storage system 20 also comprises a supply port 30, through which energy from the storage system 20 is distributed to a second off-road vehicle 40, which is different form the first vehicle 10. The second off-road vehicle 40 is not part of the invention but helps understanding its context. In the non-limitative illustrated example, the supply port is represented figuratively by a nozzle of a fuel pump, whereas the second vehicle 40 is an excavator.

The second off-road vehicle 40 comprises a second storage system 42, which is configured to store energy required to power the second off-road vehicle 40. Within the scope of the present invention, the energy used by the second off-road vehicle 40 is identical to the energy used by the first off-road vehicle 10. For example, the first vehicle 10 and the second vehicle 40 are both powered by using hydrogen. The second storage system 42 comprises a second intake port 44, which is configured be connected to an energy supply in order to to replenish the second storage system 42. For example, the second intake port 44 is configured to be connected to the energy supply 28.

On figure 1b), the supply port 30 is represented connected to the second intake port 44 of the second velhicle 40, in order to establish a connection between the first storage system 20 of the first vehicle 10 and second storage system system 42 of the second off-road vehicle 40. The supply port 30 is in a connected configuration, where it is possible to transfer energy from the first storage system 20 to the second storage system 42 through the connection between the supply port 30 to the second intake port 44. In the illustrated example, it is possible to transfer hydrogen.

The first off-road vehicle 10 comprises a distribution line 32, which links the energy storage system 20 of the first off-road vehicle 10 to the supply port 30. Usually, the distribution line 32 includes a flexible portion, so as to facilitage the connexion between the supply port 30 to the the second intake port 44. In the illustrated example, the distribution line 32 links each hydrogen tank 22 to the supply port 40.

The first off-road vehicle 20 also comprises a on-off valve 34, which is arranged on the distribution line 32 and which is configured to switch between an open configuration, where hydrogen is allowed to flow from the hydrogen tank 22 to the supply port 30, and a closed configuration, where hydrogen is prevented from flowing from the hydrogen tank 22 to the supply port 30.

The first off-road vehicle 20 also comprises a flow regulator 36, which is arranged on the distribution line 32 and which is configured to regulate a flow of hydrogen flowing though the distribution line 32 when the on-off valve 34 is in the open configuration,

The first off-road vehicle 20 also comprises a heat exchanger 38, which is arranged on the distribution line 32 and which is configured to regulate a temperature of the hydrogen flowing through the distribution line 32.

The first off-road vehicle 20 also comprises an electronic control unit 39, or ECU in short, which receives data regarding flow and/or temperature and/or ressure from at least one element among the first supply port 30, the on-off valve 34, the flow regulator 36 and the heat exchanger 38. The ECU 39 is configured to regulate the flow of hydrogen flowing through the distribution line 32 in order to ensure the safety of people and equiments.

An exemplary method method for transferring energy from the first off-road vehicle 10 to the second off-road vehicle 40 is illustrated on figure 2.

With reference to figure 2a), the first vehicle 10 is a dump truck, which performs rotations between an excavation site 81, where the excavator 40 loads the bucket 11 of the dump truck 10, and a dump site 82, where the dump truck 10 empties its bucket 11. On figure 2a), the same first vehicle 10 is represented in several configurations, at several steps of the rotation.

When the first vehicle 10 requires refueling, the first vehicle 10 goes to to a supply station 83, where the first vehicle 10 connects to the energy supply 28 in order to replenish the first storage system 20 with energy. In the illustrated example, the supply station 83 is a hydrogen supply station.

When the excavator 40 requires to be supplied with energy, the method according to the invention is implemented. The method comprises a first step 101, during which the first off-road vehicle 10 is driven close to the second off-road vehicle 40, so the first supply port 30 is connectable to the second intake port 44.

The method comprises a second step 102, which is posterior to the second first 101 and during which the first supply port 30 is connected to the second intake port 44, in order to establish a connection between the first storage system 20 and the second storage system 42. In the illustrated example, the connection between the first supply port 30 and the second intake port 44 is a fluidic connection. Alternatively, when the first storage system 20 and the second storage system 42 are both electrical storage systems, the connection between the first supply port 30 and the second intake port 44 is an electrical connection.

The method comprises a third step 103, which is posterior to the second step 102 and during which energy from the first storage system 20 is transferred to the second storage system 42 through the connection. In the illustrated example, during the third step 103, hydrogen is transferred from the first storage system 20 to the second storage system 42.

Thanks to the energy supply method according to the invention, the second off-road vehicle 40 is replenished with energy without having to move to the energy supply station 83, which prevents time loss due to the round-trip to the energy supply station 83.

Example 1 concerns a method for transferring energy from the first off-road vehicle to the second off-road vehicle, the second off-road vehicle 40 being different from the first off-road vehicle, wherein:
- the first off-road vehicle 10 comprises the first storage system 20, which is configured to store energy required to power at least one drivetrain 12 of the first off-road vehicle 10, the first storage system 20 comprising:
   - the first intake port 24, which is configured be connected to the energy supply device 28 in order to to replenish the first storage system 20, and
   - the supply port 30, through which energy from the first storage system 20 is distributed,
- the second off-road vehicle 40 comprises the second storage system 42, which is configured to store energy required to power at least one drivetrain of the second off-road vehicle 40 and which comprises the second intake port 44, which is configured be connected to the energy supply 28 in order to to replenish the second storage system 42, the energy used by the second off-road vehicle 40 being identical to the energy used by the first off-road vehicle 10,
the method comprises:
- driving the first off-road vehicle 10 close to the second off-road vehicle 40,
- connecting the first supply port 30 to the second intake port 44, in order to establish a connection between the first storage system 20 and the second storage system 40, and
- transferring energy from the first storage system 20 to the second storage system 42 through the connection.

Example 2 concerns the method according to example 1, wherein the first vehicle and the second vehicles are hydrogen-powered vehicles, the first and second energy storage systems being hydrogen tank systems.

Example 3 concerns the method according example 1, wherein the first vehicle and the second vehicles are electric vehicles, the first and second energy storage systems being electricity storage systems.

Example 4 concerns the first off-road vehicle 10, which is configured to implement the method according to any one of examples 1 to 4, wherein:
- the first off-road vehicle 10 comprises a first storage system 20, which is configured to store energy required to power at least one drivetrain 12 of the off-road vehicle,
- the first storage system 20 comprises:
   - a first intake port 24, which is configured be connected to an energy supply 28 in order to replenish the first storage system 20 with energy, and
   - a supply port 30, through which energy from the first storage system 20 can be distributed to a second off-road vehicle 40, which is different from the first off-road vehicle 10.

Example 5 concerns the off-road vehicle 10 according to example 4, wherein:
- the off-road vehicle is powered by electricity, and
- the first storage system 20 is an electrical storage system, for example a battery pack.

Example 6 concerns the off-road vehicle 10 according to example 4, wherein:
- the off-road vehicle is powered by hydrogen,
- the first storage system 20 is an hydrogen storage system.

Example 7 concerns the off-road vehicle 10 according to example 6, wherein:
- the first storage system 20 comprises at least one hydrogen tank 22,
- the off-road vehicle comprises:
   - a distribution line 32, which links the at least one hydrogen tank 22 to the supply port 30,
   - a on-off valve 34, which is arranged on the distribution line 32 and which is configured to switch between an open configuration, where hydrogen is allowed to flow from the hydrogen tank 22 to the supply port 30, and a closed configuration, where hydrogen is prevented from flowing from the hydrogen tank 22 to the supply port 30,
   - a flow regulator 36, which is arranged on the distribution line 32 and which is configured to regulate a flow of hydrogen flowing though the distribution line 32 when the on-off valve 34 is in the open configuration, and
   - a heat exchanger 38, which is arranged on the distribution line 32 and which is configured to regulate a temperature of the hydrogen flowing through the distribution line 32.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the present invention and appended claims. In the drawings and specification, there have been disclosed aspects for purposes of illustration only and not for purposes of limitation, the scope of the inventive concepts being set forth in the following claims.

## Claims

1. A method for transferring energy from a first off-road vehicle (10) to a second off-road vehicle (40), the second off-road vehicle (40) being different from the first off-road vehicle, wherein:
- the first off-road vehicle (10) comprises a first storage system (20), which is configured to store energy required to power at least one drivetrain (12) of the first off-road vehicle (10), the first storage system (20) comprising:
• a first intake port (24), which is configured be connected to an energy supply device (28) in order to to replenish the first storage system (20), and
• a supply port (30), through which energy from the first storage system (20) is distributed,
- the second off-road vehicle (40) comprises a second storage system (42), which is configured to store energy required to power at least one drivetrain of the second off-road vehicle (40) and which comprises a second intake port (44), which is configured be connected to an energy supply (28) in order to to replenish the second storage system (42), the energy used by the second off-road vehicle (40) being identical to the energy used by the first off-road vehicle (10),
- the method comprises:
• driving the first off-road vehicle (10) close to the second off-road vehicle (40),
• connecting the first supply port (30) to the second intake port (44), in order to establish a connection between the first storage system (20) and the second storage system (40),
• transferring energy from the first storage system (20) to the second storage system (42) through the connection.

2. The method according to claim 1, wherein:
- the first off-road vehicle (10) and the second off-road vehicle (40) are hydrogen-powered vehicles, the first energy storage system (20) and second energy storage system (42) being hydrogen storage systems.

3. The method according to claim 1, wherein:
- the first off-road vehicle (10) and the second off-road vehicle (40) are electric vehicles, the first energy storage system (20) and second energy storage system (42) being electrical storage systems.

4. A first off-road vehicle (10), which is configured to implement the method according to any one of claims 1 to 3, wherein:
- the first off-road vehicle (10) comprises a first storage system (20), which is configured to store energy required to power at least one drivetrain (12) of the off-road vehicle,
- the first storage system (20) comprises:
• a first intake port (24), which is configured be connected to an energy supply (28) in order to replenish the first storage system (20) with energy, and
• a supply port (30), through which energy from the first storage system (20) can be distributed to a second off-road vehicle (40), which is different from the first off-road vehicle (10).

5. The off-road vehicle (10) according to claim 4, wherein:
- the off-road vehicle is powered by electricity, and
- the first storage system (20) is an electrical storage system, for example a battery pack.

6. The off-road vehicle (10) according to claim 4, wherein:
- the off-road vehicle is powered by hydrogen,
- the first storage system (20) is an hydrogen storage system.

7. The off-road vehicle (10) according to claim 6, wherein:
- the first storage system (20) comprises at least one hydrogen tank (22),
- the off-road vehicle comprises:
• a distribution line (32), which links the at least one hydrogen tank (22) to the supply port (30),
• a on-off valve (34), which is arranged on the distribution line (32) and which is configured to switch between an open configuration, where hydrogen is allowed to flow from the hydrogen tank (22) to the supply port (30), and a closed configuration, where hydrogen is prevented from flowing from the hydrogen tank (22) to the supply port (30),
• a flow regulator (36), which is arranged on the distribution line (32) and which is configured to regulate a flow of hydrogen flowing though the distribution line (32) when the on-off valve (34) is in the open configuration, and
• a heat exchanger (38), which is arranged on the distribution line (32) and which is configured to regulate a temperature of the hydrogen flowing through the distribution line (32).
